# FASCICULE DE BREVET EUROPEEN

(11) **EP 1 191 848 B1**
(45) Date de publication et mention de la délivrance du brevet: **06.05.2004**
(21) Numéro de dépôt: 00945986.8
(22) Date de dépôt: 22.06.2000
(51) Int. Cl.: A01N 57/20, A01N 25/30

(54) **COMPOSITION PHYTOSANITAIRE COMPRENANT UN AGENT HYDROSOLUBLE ET UNE HUILE MODIFIEE**
PHYTOSANITÄRE ZUSAMMENSETZUNG DIE EINEN WASSERLÖSLICHEN WIRKSTOFF UND EIN MODIFIZIERTES ÖL ENTHÄLT
PHYTOSANITARY COMPOSITION COMPRISING AT LEAST A WATER SOLUBLE AGENT AND A MODIFIED OIL

(30) Priorité: 23.06.1999 FR 9908010
(43) Date de publication de la demande: 03.04.2002
(73) Titulaire: Institut National de la Recherche Agronomique, 75338 Paris Cédex 07 (FR); SOCIETE D'EXPLOITATION DE PRODUITS POUR LES INDUSTRIES CHIMIQUES, S.E.P.P.I.C., 75321 Paris Cédex 07 (FR)
(72) Inventeur: MILIUS, Alain, F-06000 Nice (FR); GAUVRIT, Christian, F-21000 Dijon (FR); MULLER, Thomas, F-21110 Izier (FR); BRANCQ, Bernard, F-78150 Le Chesnay (FR)
(74) Mandataire: Conan, Philippe Claude
(86) Numéro de dépôt international: PCT/FR2000/001740
(87) Numéro de publication internationale: WO 2001/000028

(56) Documents cités:
- EP-A- 0 508 022
- EP-A- 0 943 241
- WO-A-92/06596
- WO-A-96/22109
- WO-A-99/03343
- FR-A- 2 718 980
- FR-A- 2 780 612
- US-A- 4 557 751
- DATABASE WPI Section Ch, Week 199646 Derwent Publications Ltd., London, GB; Class A97, AN 1996-464693 XP002133516 & WO 96 31121 A (NIPPON SODA CO), 10 octobre 1996 (1996-10-10)
- DATABASE CHEMABS [en ligne] CHEMICAL ABSTRACTS SERVICE, COLUMBUS, OHIO, US; retrieved from STN-INTERNATIONAL, accession no. 123:278718 XP002133515 & HU 67 542 A (ALKALOIDA VEGYESZETI GYAR) 28 avril 1995 (1995-04-28)

## Description

L'invention a pour objet un procédé de traitement phytosanitaire par absorption foliaire, mettant en oeuvre une association entre un principe actif et une huile modifiée et une nouvelle association pour la mise en oeuvre dudit procédé.

La pénétration d'un principe actif phytosanitaire dans une plante s'effectue, soit au niveau des feuilles, par absorption foliaire, soit au niveau des racines, par absorption radiculaire. L'absorption foliaire d'un principe actif est souvent difficile et très faible ; c'est notamment le cas pour le glyphosate qui doit être formulé avec des agents tensioactifs pour augmenter cette pénétration. La demande de brevet européen No. 0 508 022 divulgue une composition à base d'huile de ricin poly-éthoxylée avec un indice d'OE de 54. Dans la demande internationale de brevet publiée sous le numéro WO 99/03343, les inventeurs proposent l'utilisation d'esters méthyliques d'acides gras éthoxylés, en combinaison avec des huiles végétales, en tant qu'agents mouillant, dispersant et émulsifiant, dans des concentrés herbicides, pour améliorer leur stabilité. Cependant, cette approche ne convient pas aux matières actives hydrosolubles car elle conduit à des émulsions.

Cependant, lorsque l'on traite avec des faibles quantités de glyphosate, c'est à dire inférieures ou égales à 306 grammes par hectare, comme c'est le cas dans la conduite des jachères ou pour le traitement de jeunes plantes annuelles, aucun des adjuvants actuellement mis en oeuvre avec ce principe actif, ne permet d'atteindre un taux d'absorption supérieur à 50% après 72 heures. Une période de pluie consécutive au traitement d'une culture risque donc d'induire une pollution du site, tandis qu'une période d'ensoleillement peut provoquer la dégradation du principe actif.

Les demanderesses se sont donc efforcées de mettre au point un procédé de traitement phytosanitaire par absorption foliaire, qui permette en peu de temps, une absorption élevée d'un principe actif hydrophile par la plante, tout en limitant les nuisances vis à vis des écosystèmes, et en utilisant des adjuvants beaucoup moins irritants, notamment pour les yeux, que ceux utilisés jusqu'à aujourd'hui.

L'invention a pour objet un procédé de traitement phytosanitaire par absorption foliaire, caractérisé en ce qu'il met en oeuvre une composition aqueuse comprenant au moins un principe actif phytosanitaire hydrosoluble et au moins une huile modifiée, choisie parmi les huiles éthoxylées de colza ou de tournesol ayant un nombre d'oxyde d'éthylène, appelé par la suite, indice d'OE, supérieur ou égal à 30 et inférieur ou égal à 40 et caractérisé en ce que le principe actif phytosanitaire est le le glyphosate ou N-(phosphonométhyl) glycine, sous forme de sel hydrosoluble, tel que par exemple les sels de monoisopropylamine ou de triméthylsulfonium.

Selon un autre aspect de la présente invention, celle-ci a pour objet une composition comprenant au moins un principe actif phytosanitaire hydrosoluble, et au moins une huile végétale modifiée, caractérisée en ce que ladite huile végétale modifiée est choisie parmi les huiles éthoxylées de colza ou de tournesol ayant un nombre d'oxyde d'éthylène, supérieur ou égal à 30 et inférieur ou égal à 40 et caractérisé en ce que le principe actif est le glyphosate ou N-phosphonométhylglycine, sous forme de sel hydrosoluble, tel que, par exemple, les sels de monoisopropylamine, ou de triméthylsulfonium.

Pour améliorer sa tenue au froid, l'huile alkoxylée peut être préparée en incorporant, avant son alkoxylation de 1% à 10% en poids de glycérol.

### EXEMPLE 1 : PREPARATION D'HUILES DE COLZA ETHOXYLEES

On obtient les huiles de colza ethoxylées à partir de l'huile de colza, par réaction en présence de 2% en poids de glycérol pendant 45 minutes environ, à 180°C et sous une pression de 4,5 bars, avec la quantité d'oxyde d'éthylène nécessaire à l'obtention du rapport molaire désiré, en présence d'un catalyseur basique, puis refroidissement et neutralisation du catalyseur.

### EXEMPLE 2 : ETUDE DE LA CAPACITE DES HUILES VEGETALES MODIFIEES A STIMULER LA PENETRATION FOLIAIRE D'UN PRINCIPE ACTIF PHYTOSANITAIRE.

### A) Compositions de glyphosate

On a comparé la pénétration dans les feuilles d'orge, (Hordeum vulgare L.) du glyphosate, qui est un herbicide hydrophile (log P < -3,4), dénommé N-(phosphonométhyl) glycine), suivant le mode opératoire suivant:

Le glyphosate marqué au carbone 14 est mis en solution dans l'eau (4,5 à 21 millimolaire ; 30 à 50 Bq ηL⁻¹), en l'absence d'huile végétale modifiée. En référence, la même quantité de glyphosate radioactif est incluse dans une préparation commerciale de glyphosate. Dix gouttes de 0,4 ηL sont appliquées sur la face adaxiale de la première feuille de l'orge. A O, 6, 24 et 72 heures, le produit non pénétré est lavé par 0,5 mL d'un mélange acétone/eau (1:1, V/V) et la radioactivité est mesurée par scintillation liquide. La radioactivité présente dans la feuille traitée et dans le reste de la plante est déterminée dans le dioxyde de carbone obtenu après combustion du tissu. Les résultats de trois séries d'essais indépendantes les unes des autres, exprimés en pourcentage de radioactivité ayant pénétré dans la plante, par rapport à la radioactivité déposée, sont exposés dans les tableaux suivants :

**Tableau 1**

| | PENETRATION FOLIAIRE A : | | |
|---|---|---|---|
| COMPOSITION | 06 HEURES | 24 HEURES | 72 HEURES |
| GLYPHOSATE + ETHOMEEN T/25 (1%) composition de l'état de la technique | 28% | 39% | 60% |
| GLYPHOSATE + huile de colza (6 OE) (1%) composition de l'état de la technique | 5% | 25% | 42% |
| GLYPHOSATE + huile de colza (10 OE) (1%) composition de l'état de la technique | 8% | 30% | 48% |
| GLYPHOSATE + huile de colza (20 OE) (1%) composition de l'état de la technique | 18% | 34% | 62% |
| GLYPHOSATE + huile de colza (30 OE) (1%) composition selon l'invention | 28% | 62% | 63% |
| GLYPHOSATE + huile de colza (40 OE) (1%) composition selon l'invention | 34% | 70% | 65% |

Les résultats de ce premier tableau, mettent en évidence la supériorité de l'huile de colza éthoxylée, ayant un indice d'OE supérieur ou égal à 30, quant à la pénétration foliaire principe actif, par rapport à celles des additifs connus.

**Tableau 2**

| | PENETRATION FOLIAIRE A : | | |
|---|---|---|---|
| COMPOSITION | 06 HEURES | 24 HEURES | 72 HEURES |
| GLYPHOSATE+ ETHOMEEN T/25 (1%) composition de l'état de la technique | 40% | 50% | 70% |
| GLYPHOSATE ETHOMEEN T/25 (1%) + HUILE DE COLZA (40 OE) (1%) (composition de l'invention) | 49% | 50% | 70% |
| GLYPHOSATE HUILE DE COLZA (40 OE) (1%) (composition de l'invention) | 40% | 50% | 70% |

Les résultats de ce deuxième tableau mettent en évidence l'intérêt qu'il y a, à associer une ou plusieurs huiles modifiées avec un principe actif hydrophile, pour un traitement phytosanitaire par absorption foliaire.

## Revendications

1. Procédé de traitement phytosanitaire par absorption foliaire, **caractérisé en ce qu'**il met en oeuvre une composition aqueuse comprenant au moins un principe actif phytosanitaire hydrosoluble et au moins une huile modifiée, choisie parmi les huiles éthoxylées de colza ou de tournesol ayant un indice d'OE, supérieur ou égal à 30 et inférieur ou égal à 40 et **caractérisé en ce que** le principe actif phytosanitaire, est le glyphosate ou N-(phosphonométhyl) glycine, sous forme de sel hydrosoluble.

2. Procédé tel que défini à la revendication 1, dans lequel le sel hydrosoluble de glyphosate est choisi parmi les sels de monoisopropylamine ou de triméthylsulfonium.

3. Composition comprenant au moins un principe actif phytosanitaire hydrosoluble, et au moins une huile végétale modifiée, **caractérisée en ce que** ladite huile végétale modifiée est choisie parmi les huiles éthoxylées de colza ou de tournesol ayant un nombre d'oxyde d'éthylène, supérieur ou égal à 30 et inférieur ou égal à 40 et **caractérisée en ce que** le principe actif phytosanitaire, est le glyphosate ou N-(phosphonométhyl) glycine, sous forme de sel hydrosoluble.

4. Composition telle que définie à la revendication 3 dans laquelle le sel hydrosoluble de glyphosate est choisi parmi les sels de monoisopropylamine ou de triméthylsulfonium.

## Claims

1. Method of phytosanitary treatment by foliar absorption, **characterized in that** it employs an aqueous composition comprising at least one water-soluble phytosanitary active principle and at least one modified oil, chosen from the ethoxylated sunflower or rapeseed oils having an EO index of greater than or equal to 30 and less than or equal to 40 and **characterized in that** the phytosanitary active principle is glyphosate or N-(phosphonomethyl)glycine, in the form of a water-soluble salt.

2. Method as defined in Claim 1, in which the water-soluble glyphosphate salt is chosen from the monoisopropylamine or trimethylsulfonium salts.

3. Composition comprising at least one water-soluble phytosanitary active principle, and at least one modified vegetable oil, **characterized in that** the said modified vegetable oil is chosen from the ethoxylated sunflower or rapeseed oils having an ethylene oxide number of greater than or equal to 30 and less than or equal to 40 and **characterized in that** the phytosanitary active principle is glyphosate or N-(phosphonomethyl)glycine, in the form of a water-soluble salt.

4. Composition as defined in Claim 3, in which the water-soluble glyphosphate salt is chosen from the monoisopropylamine or trimethylsulfonium salts.

## Patentansprüche

1. Phytosanitäres blattwirksames Behandlungsverfahren, **dadurch gekennzeichnet, daß** dabei eine wäßrige Zusammensetzung, die mindestens eine wasserlösliche phytosanitäre Wirksubstanz und mindestens ein modifiziertes Öl aus der Gruppe der ethoxilierten Raps- oder Sonnenblumenöle mit einem EO-Index von 30 und darüber bzw. 40 und darunter, enthält, **dadurch gekennzeichnet, daß** es sich bei der phytosanitären Wirksubstanz um Glyphosat, oder N-(Phosphonomethyl)glycin, in Form eines wasserlöslichen Salzes handelt.

2. Verfahren nach Anspruch 1, wobei das wasserlösliche Glyphosat-Salz aus der Gruppe der Monoisopropylamin- oder Trimethylsulfoniumsalze stammt.

3. Zusammensetzung, die mindestens eine wasserlösliche phytosanitäre Wirksubstanz und mindestens ein modifiziertes Pflanzenöl enthält, **dadurch gekennzeichnet, daß** das modifizierte Pflanzenöl aus der Gruppe der ethoxilierten Raps- oder Sonnenblumenöle mit einem EO-Index von 30 und darüber bzw. 40 und darunter, enthält, **dadurch gekennzeichnet, daß** es sich bei der phytosanitären Wirksubstanz um Glyphosat oder N-(Phosphonomethyl)glycin, in Form eines wasserlöslichen Salzes, handelt.

4. Zusammensetzung nach Anspruch 3, wobei das wasserlösliche Glyphosat-Salz aus der Gruppe der Monoisopropylamin- oder Trimethylsulfoniumsalze stammt.
